# EUROPÄISCHE PATENTSCHRIFT

(11) **EP 1 621 911 B1**
(45) Veröffentlichungstag und Bekanntmachung des Hinweises auf die Patenterteilung: **02.06.2010**
(21) Anmeldenummer: 05015117.4
(22) Anmeldetag: 12.07.2005
(51) Int. Cl.: G02B 21/12

(54) **Kondensoranordnung für Hell- oder Dunkelfeldbeleuchtung für Lichtmikroskope**
Microscope condensor arrangement for bright- or dark field illiumination
Condenseur d'un microscope pour éclairage fond clair ou fond noir

(30) Priorität: 29.07.2004 DE 102004036863
(43) Veröffentlichungstag der Anmeldung: 01.02.2006
(73) Patentinhaber: Carl Zeiss MicroImaging GmbH, Carl-Zeiss-Promenade 10 07745 Jena (DE)
(72) Erfinder: Dietrich, Peter, 73447 Oberkochen (DE); Heise, Heino, 37139 Adelebsen (DE); Brehm, Michael, 74429 Sulzbach-Laufen (DE)
(74) Vertreter: Scholze, Humbert

(56) Entgegenhaltungen:
- DE-B- 1 123 134
- DE-C- 603 322
- DE-C- 721 942
- DE-C- 830 840
- US-A- 2 565 419
- US-A- 2 642 775
- US-A- 2 674 157
- US-A- 5 128 808
- PATENT ABSTRACTS OF JAPAN Bd. 2002, Nr. 05, 3. Mai 2002 (2002-05-03) & JP 2002 006224 A (OLYMPUS OPTICAL CO LTD), 9. Januar 2002 (2002-01-09)

## Beschreibung

Die Erfindung betrifft eine Kondensoranordnung für Hell- und/oder Dunkelfeldbeleuchtung für Lichtmikroskope mit einer Einrichtung zum Umschalten von Hellfeld- auf Dunkelfeldbeleuchtung und eine dazu geeignete Dunkelfeldbeleuchtungsoptik nach Art eines Kardioidkondensors.

Für den mikroskopischen Anwender ist das Betrachten von Objektdetails mit unterschiedlichen Kontrastierungen, welche durch unterschiedliche Beleuchtungsarten, wie z.B. Hellfeld- und/oder Dunkelfeldbeleuchtung der Objekte, realisiert werden können, wichtig, um aus verschiedenen Blickwinkeln mehr Informationen aus dem Objekt zu erhalten. So ist der alternative Einsatz von Durchlicht-Hellfeld-Beleuchtung und Durchlicht-Dunkelfeld-Beleuchtung an ein und demselben Objektdetail äußerst informativ. Im klinischen und biologischen Labor z.B. und auch in anderen Bereichen zielen die Applikationen häufig auf die Identifizierung und den Nachweis von Strukturen hin, die unterhalb der Auflösungsgrenze des Mikroskops liegen können. Dabei ist bei dem Einsatz nur einer Kontrastierung im Hellfeld unter Umständen kein Nachweis einer Struktur möglich oder die Darstellung ist unbefriedigend.

Bei der Dunkelfeldbeleuchtung in der Lichtmikroskopie wird das zu beobachtende Objekt seitlich beleuchtet, so daß das am Objekt gestreute Licht durch die Optik des Mikroskops beobachtet und ausgewertet werden kann. Durch die Dunkelfeldbeleuchtung können bestimmte Objektstrukturen deutlicher hervorgehoben werden und sehr kleine Objekte noch erkannt werden.

Eine wechselweise Zuschaltung einer alternativen Kontrastierung, vorzugsweise Dunkelfeld, ist häufig von Nutzen. So ist in der Praxis eine befriedigende Lösung gegeben, wenn beide Beleuchtungsarten folgende Leistungsmerkmale realisieren:
- Hellfeld:: Einerseits hohe Apertur für eine gute Auflösung und andererseits ein großes Objektfeld für die Erfassung eines möglichst großen Objektausschnittes.
- Dunkelfeld:: Einerseits höchste Beleuchtungsapertur für die Erkennung submikroskopischer Strukturen und andererseits die Ausleuchtung großer Objektfelder im Dunkelfeld für die Erfassung eines möglichst großen Objektausschnittes.

Bekannt sind Methoden und Anordnungen für die Anwendung von Hellfeld- und Dunkelfeldbeleuchtung einzeln und auch kombiniert mit unterschiedlichen Kondensoren.

So ist beispielsweise aus der DE 37 00 965 A1 eine Beleuchtungseinrichtung bekannt, bei der Kondensoren mit schwenkbarer Frontoptik für Hellfeldbeleuchtung mit einer Schaltung zwischen hoher Apertur und kleinem Objektfeld einerseits und kleiner Apertur bei großem Objektfeld andererseits angewendet werden. Dabei erfolgt die Dunkelfeldbeleuchtung über eine zentrale Ringblende in der Aperturblendenebene bzw. in der Kondensorpupille. Diese Lösung funktioniert nur für einen eingeschränkten Vergrößerungsbereich der Objektive.

Von den Firmen Zeiss und Leica werden auch Einrichtungen angeboten, die ein wechselweises Schalten zwischen Hellfeld und Dunkelfeld in einem Kombinationskondensor gestatten.

Eine solche Einrichtung ist in der DE 721 942 C beschrieben. Dabei wird jeweils ein kompletter Kondensor (Hellfeld, Übersichtsbeleuchtung, Kardioidkondensor) gewechselt. Um die bei diesem Wechsel auftretenden Änderungen der Beleuchtungswerhältnisse auszugleichen ist eine Pankratoptik notwendig, welche mittels eines Rändelringes das Nachjustieren ermöglicht.

Allen diesen Einrichtungen haften jedoch Nachteile hinsichtlich des alternativen Einsatzes an. Mit Spezialkondensoren ist nur Hellfeld im gesamten Vergrößerungsbereich unter optimalen Feld- bzw. Aperturbedingungen möglich, oder es ist nur ein rotationssymmetrisches Dunkelfeld im mittleren Vergrößerungsbereich bzw. einseitiges Dunkelfeld für schwache Vergrößerungen befriedigend realisierbar. Der Kombinationskondensor liefert zwar ein gutes Hellfeld, das Dunkelfeld jedoch in eingeschränkter Qualität. Ein weiterer Nachteil mancher Kombinationskondensoren, bei denen Aperturiris und Revolverscheibe mit weiteren Kontrastierungselementen in unterschiedlicher Höhe des Strahlenganges angeordnet sind (Kondensor U-UCD 8 der Firma Olympus, JP), ist dadurch gegeben, daß bei Schaltung auf Hellfeld die Aperturblende nachgeregelt werden muß. Es muß der ursprüngliche Durchmesser der Blende wieder eingestellt werden, um identische Kontrastverhältnisse zu realisieren. Ein absolut gleicher Bildeindruck ist dabei nur schwer zu erreichen, weil die Einstellung subjektiv beurteilt wird. Bei einem Wechsel von Hellfeld zu anderen Kontrastierungen, wie z.B. Dunkelfeld, ist die Aperturblende ganz zu öffnen, um den Beleuchtungskanal an der Ringblende freizugeben. Dasselbe gilt auch für Hellfeld bei schwachen Vergrößerungen, wenn eine Frontoptik des Kondensors ausgeschaltet ist.

Zur Realisierung einer Dunkelfeldbeleuchtung von mikroskopischen Objekten mit oder ohne Zwischenschaltung einer Immersionsflüssigkeit sind verschiedene optische Anordnungen bekannt.

So kann eine solche Beleuchtung durch die Anwendung geeigneter Ringblenden in der eintrittsseitigen Kondensorpupille realisiert werden.

Aus JP 102268205 sind zur Erreichung des gleichen Zweckes Planspiegelanordnungen bekannt, die das Licht über Lichttreppen mit einer hohen Apertur in die Objektebene lenken.

Ferner sind Kardioidsysteme mit gekrümmten reflektierenden Flächen bekannt, welche eine aplanatisch korrigierte Ausleuchtung der Objektebene unter einer hohen Apertur ermöglichen.

Aus der JP 11153755 ist die Verwendung eines Ringes aus torischen Mikrospiegeln bekannt, welcher das Licht unter einer hohen Apertur auf die Objektebene lenkt.

Aus der DR 830 840 und DE 24 10 874 ist eine aus konkaven und konvexen Ringspiegeln bestehende Anordnung zur Dunkelfeldbeleuchtung für Mikroskope bekannt. Allen diesen Anordnungen haftet der Nachteil an, daß mit ihnen nur relativ kleine Objektfelder ausgeleuchtet werden können und sie deshalb nur für hohe Vergrößerungen geeignet sind.

Um auch größere Objektfelder ausleuchten zu können, wird in der DE 34 25 674 vorgeschlagen, einen Toroid-Ringspiegel vorzusehen. Nachteilig ist jedoch, daß für größere Objektfelder die Ausleuchtung inhomogen wird und eine zusätzliche Streuscheibe zur Homogenisierung eingesetzt werden muß. Dadurch ist jedoch eine Verschlechterung der Lichtausbeute in der Objektebene zu verzeichnen.

In der DR 608 644 wird ferner ein Kondensor beschrieben, bei welchem einander zugeordnete, pyramidenförmige Teilspiegelflächen als Haupt- und Gegenspiegel benutzt werden. Prinzipbedingt weist auch diese Anordnung Inhomogenitäten in der Beleuchtung auf. Des Weiteren ist die Realisierung des Konkavspiegels als segmentierter Spiegel mit der erforderlichen Genauigkeit schwierig.

Für kleine Vergrößerungen sind auch Lösungen bekannt, die eine Spiegeltreppe mit drei Spiegelflächen verwenden, wobei eine dieser Spiegelflächen noch eingestanzte, torische Mikrospiegel aufweist.

Für die Realisierung einer Dunkelfeldbeleuchtung mit und ohne Verwendung einer Immersion werden bis jetzt stets unterschiedliche Beleuchtungsoptiken verwendet, weil es bei den hohen numerischen Aperturen und bei höheren Vergrößerungen sehr schwierig ist, optische Anordnungen zu realisieren, die sowohl für Trocken- als auch für Immersionsbeleuchtung im Dunkelfeld geeignet sind.

Der Erfindung liegt die Aufgabe zu Grunde, eine Kondensoranordnung für Hell- und/oder Dunkelfeldbeleuchtung bei Lichtmikroskopen zu schaffen, durch welche die Nachteile des Standes der Technik weitestgehend beseitigt werden und mit der bei guter Reproduzierbarkeit und Qualität der Beleuchtungsverhältnisse, bei hoher Leistung und weitestgehend unabhängig von der Apertur eine optimale (gleichmäßige, streulichtarme und rotationssymmetrische) Ausleuchtung unterschiedlich großer Objektfelder in Hell- und/oder im Dunkelfeld mit und ohne Immersion und eine einfache Umschaltung zwischen diesen Beleuchtungsarten ermöglicht werden.

Erfindungsgemäß wird diese Aufgabe durch die Merkmale des Anspruches 1 gelöst. Weitere Einzelheiten und Ausgestaltungen der Erfindung sind in den Unteransprüchen offenbart.

Um Frontoptiken in den Strahlengang einschalten zu können, sind am Gehäuse des Kondensors Schwenkarme schwenkbar angeordnet, wobei ein erster Schwenkarm eine erste Frontoptik mit einer hohen Apertur für Hellfeldbeleuchtung und ein zweiter Schwenkarm eine zweite Frontoptik für Dunkelfeldbeleuchtung trägt.

Dabei ist es vorteilhaft, wenn der erste und der zweite Schwenkarm in einem definierten Abstand zu der gemeinsamen Grundoptik des Kondensors in Richtung der optischen Achse des Beleuchtungsstrahlenganges angeordnet sind.

So ist es auch von Vorteil, daß eine Aperturirisblende objektseitig vor der Grundoptik vorgesehen ist, welche bei eingeschalteter Kardioidoptik geöffnet ist.

Vorteilhaft ist es ferner, wenn objektseitig am Gehäuse ein Dunkelfeldschieber mit einem Ringspiegelelement vorgesehen ist.

Zur einfachen Bedienung der Anordnung ist es von Vorteil, daß Bedienelemente zur Schwenkung der beiden Schwenkarme, zur Bewegung des Dunkelfeldschiebers und zur Einstellung der Aperturirisblende vorgesehen sind.

So besteht auch eine günstige Ausführung darin, daß die Mittel zum Einbringen der Kardioidoptik in den Strahlengang als Schwenkarm, Schieber oder als Revolver ausgeführt sind.

Vorteilhaft ist es auch, wenn auf dem Dunkelfeldschieber weitere optische Elemente, wie DIC-Prismen, Ringblenden zur Realisierung von Phasenkontrast oder Zentraldunkelfeld vorgesehen sind, welche bei eingeschalteter Hellfeldoptik in den Strahlengang einbringbar sind.

Ferner ergibt sich eine vorteilhafte Ausführung der Erfindung daraus, daß die erste Frontoptik eine hochaperturige Optik für Hellfeldbeleuchtung und die zweite Frontoptik eine Kardioidoptik für Dunkelfeldbeleuchtung ist, welche insbesondere bei kleinen und mittleren Objektfeldern je nach Beleuchtungsart wechselweise in den Beleuchtungsstrahlengang vor der Grundoptik ein- und ausgeschaltet werden.

Es ist auch vorteilhaft, wenn zur Realisierung einer rotationssymmetrischen Dunkelfeldbeleuchtung und bei großen Objektfeldern das Ringspiegelelement bei ausgeschalteten Frontoptiken bei geöffneter Aperturirisblende in den Beleuchtungsstrahlengang eingeschaltet ist.

Um eine reproduzierbare Einstellung des Durchmessers der Aperturirisblende im Hellfeld bei Wiedereinschaltung der Frontoptik zu gewährleisten, ist es günstig, wenn der erste Schwenkarm über einen ersten Hebelmechanismus mit der Bedienhandhabe für die Aperturirisblende derart verbunden ist, daß beim Einschwenken der ersten Frontoptik in den Beleuchtungsstrahlengang die Aperturirisblende auf den zuvor eingestellten Durchmesser eingestellt ist.

Um den Dunkelfeldstrahlengang freizuschalten, ist es ferner vorteilhaft, daß der zweite Schwenkarm über einen zweiten Hebelmechanismus mit der Bedienhandhabe für die Aperturirisblende derart verbunden ist, daß beim Einschwenken der zweiten Frontoptik in den Beleuchtungsstrahlengang die Aperturirisblende geöffnet ist. Dieser zweite Hebelmechanismus greift an der Irisblende an.

Die Kondensoranordnung für Hell- und /oder Dunkelfeldbeleuchtung umfaßt ferner eine Kardioidoptik zur Realisierung der Dunkelfeldbeleuchtung, wobei diese Optik der Grundoptik für die Hellfeldbeleuchtung vorschaltbar und den Eigenschaften der Grundoptik angepaßt ist, und ein zusammengesetztes Spiegellinsensystem mit mindestens je einer konkaven und mindestens einer konvexen, spiegelnden Fläche, welche auf mindestens einer Linse angeordnet sind. Je nach Anwendungsfall ist objektseitig in den Strahlengang vor der Kardioidoptik eine Zusatzoptik, vorzugsweise eine Vorschalt- oder Aufstecklinse, einschaltbar vorgesehen.

Eine bevorzugte Ausführung dieser Kardioidoptik ergibt sich mit den Daten der nachfolgenden Tabelle:

| Linse | Radius | Dicke | n_{d} | ν_{d} | FRD |
|---|---|---|---|---|---|
| L₁ | r₁ = 16.1960 | 9.380 | 1.784 | 26.10 | 30.000 |
| | r₂ = 11.5461 | 3.680 | 1.607 | 56.65 | 23.092 |
| L₂ | r₃ = 8.0590 S | 3.680 | 1.607 | 56.65 | 15.720 |
| | r₄ = -11.5461 S | 7.200 | 1.607 | 56.65 | |
| IM | r₅ = 11.8839 | 9.620 | 1.000/1.515 | --/47.75 | 22.000 |
| T | | 1.100 | 1.522 | 59.48 | 12.000 |

wobei die überhalbkugelige, verspiegelte Kugelsegmentfläche auf der Linse L₂ durch Radien -13.400 mm und -6.800 mm vor dem objektseitigen Linsenscheitel begrenzt ist und n_{d} der Brechungsindex des Glases, ν_{d} die Abbe'sche Zahl, FRD der freie Durchmesser, T der Objektträger, S die verspiegelte Fläche, L₁ und L₂ Linsen und IM das Immersionsmedium sind.

Zur Realisierung einer veränderten Beleuchtungsapertur ist es vorteilhaft, wenn der Kardioidoptik objektseitig eine Zusatzoptik, vorzugsweise in Form einer Vorschalt- oder Aufstecklinse, vorgeschaltet ist und wenn diese Ausführung die nachfolgenden Daten umfaßt:

| Linse | Radius | Dicke | n_{d} | ν_{d} | FRD |
|---|---|---|---|---|---|
| L₁ | r₁ = 16.1960 | 9.380 | 1.784 | 26.10 | 30.000 |
| | r₂ = 11.5461 | 3.680 | 1.607 | 56.65 | 23.092 |
| L₂ | r₃ = 8.0590 S | 3.680 | 1.607 | 56.65 | 15.720 |
| | r₄ = -11.5461 S | 7.200 | 1.607 | 56.65 | 22.000 |
| Luft | r₅ = 11.8839 | 0.00145 | 1.000 | -- | 22.000 |
| L₃ | r₆ = 11.884784 | 8.850 | 1.522 | 59.48 | 22.000 |
| IM | | 0.465 | 1.515 | 47.75 | 22.000 |
| T | | 1.100 | 1.522 | 59.48 | 12.000 |

wobei die kreisförmige, verspiegelte Kugelsegmentfläche auf der Linse L₂ durch Radien -13.400 mm und -6.800 mm vor dem objektseitigen Linsenscheitel begrenzt ist und n_{d} der Brechungsindex des Glases, ν_{d} die Abbe'sche Zahl, FRD der freie Durchmesser, T der Objektträger S die verspiegelte Fläche, L₁ bis L₃ Linsen und IM das Immersionsmedium sind.

Eine weitere vorteilhafte Kardioidoptik ergibt sich ferner, wenn diese gemäß den nachfolgenden Daten ausgebildet ist:

| Linse | Radius | Dicke | n_{d} | ν_{d} | FRD |
|---|---|---|---|---|---|
| L₄ | r₇ = 15.6230 | 2.110 | 1.713 | 53.83 | 30.400 |
| | r₈ = 15.9619 | 5.350 | 1.487 | 70.41 | 29.600 |
| L₅ | r₉ = 10.8200 S | 5.350 | 1.487 | 70.41 | 21.500 |
| | r₁₀ = -15.9619 S | 8.920 | 1.487 | 70.41 | |
| L₆ | r₁₁ = 12.4960 | 6.460 | 2.022 | 29.06 | 25.600 |
| | r₁₂ = 8.4140 | 7.510 | | | |
| IM | r₁₃ = 8.4140 | 7.000 | 1.515 | 47.75 | 16.400 |
| T | | 1.100 | 1.515 | 59.48 | 12.000 |

wobei die überhalbkuglige, verspiegelte Kugelsegmentfläche auf der Linse L₅ durch Radien -19.000 mm und -10.000 mm vor dem objektseitigen Linsenscheitel begrenzt ist und n_{d} der Brechungsindex des Glases, ν_{d} die Abbe'sche Zahl, FRD der freie Durchmesser, T der Objektträger, S die verspiegelte Fläche, L₄ bis L₆ Linsen und IM das Immersionsmedium sind.

Ferner kann eine Kardioidoptik vorgesehen werden, die die folgenden Daten umfaßt:

| Linse | Radius | Dicke | n_{d} | ν_{d} | FRD |
|---|---|---|---|---|---|
| L₇ | r₁₄ = 15.8495 | 3.0110 | 1.713 | 53.83 | 30.800 |
| | r₁₅ = 15.8495 | 5.5280 | 1.487 | 70.41 | 29.200 |
| L₈ | r₁₆ = 10.4410 S | 5.5280 | 1.487 | 70.41 | 20.700 |
| | r₁₇.= -15.8495 S | 8.9400 | 1.487 | 70.41 | |
| L₉ | r₁₈ = 12.0575 | 5.8360 | 2.022 | 29.06 | 24.114 |
| | r₁₉ = 8.5340 | 7.8500 | | | 16.736 |
| IM | r₂₀ = 8.5340 | 7.3000 | 1.515 | 47.75 | 16.736 |
| T | | 1.1000 | 1.522 | 59.48 | 12.000 |

wobei die kreisförmige, verspiegelte Kugelsegmentfläche mit Radius r₁₇ auf der Linse L₈ durch Radien -19.000 mm und -10.000 mm vor dem objektseitigen Linsenscheitel begrenzt ist und n_{d} der Brechungsindex des Glases, ν_{d} die Abbe'sche Zahl, FRD der freie Durchmesser, T der Objektträger, S die verspiegelte Fläche, L₇ bis L₉ Linsen und IM das Immersionsmedium sind.

Die Erfindung erbringt den nicht zu unterschätzenden Vorteil, daß die erfindungsgemäße Kardioidoptik sowohl ohne als auch mit einem Immersionsmedium angewendet werden kann. Somit werden für beide Anwendungsfälle keine speziellen Optiken mehr benötigt. Da bei Kardioidsystemen der Innenspiegel sehr praktisch gleichzeitig die Abschattung der niedrigaperturigen Lichtstrahlen bewirkt und sehr objektnah liegen kann, gelingt es, das auf Grund von Restaberrationen bedingte Falschlicht gering zu halten. Gleichzeitig blockiert der abschattende Innenspiegel auch sämtliches Streu- und Reflexlicht der darunter liegenden Optik, wodurch der Dunkelfeldkontrast noch brillanter wird. Bei zentral angeordneten Dunkelfeldblenden wird dieses Licht durch entsprechend überdimensionierte Blenden in der Pupille weggenommen, womit das zur Dunkelfeldbeleuchtung verwendete Licht weiter dezimiert wird. Die Kardioidoptik kann gegenüber der Zentralblende mehr Licht zur Dunkelfeldbeleuchtung zur Verfügung stellen.

Die Erfindung soll nachstehend an Ausführungsbeispielen näher erläutert werden. In der Zeichnung zeigen
- Fig.1a: eine Kondensoranordnung bei eingestellter Dunkelfeldbeleuchtung,
- Fig.1b: die Kondensoranordnung bei eingestellter Hellfeldbeleuchtung,
- Fig.1c: eine Seitenansicht der Kondensoranordnung nach Fig.1b,
- Fig.ld: die Kondensoranordnung nach Fig.1c in einer Ansicht von unten,
- Fig.2a: eine Kondensoranordnung mit ausgeschwenkten Frontoptiken in einer Ansicht von oben,
- Fig.2b: die Kondensoranordnung nach Fig.2a in einer Ansicht von unten,
- Fig.3: die Kondensoranordnung nach Fig.1a in einer Ansicht von unten,
- Fig.4: einen meridionalen Linsenschnitt einer aus zwei Linsen bestehenden Kardioidoptik ohne Immersion,
- Fig.5: einen meridionalen Linsenschnitt der aus zwei Linsen bestehenden Kardioidoptik mit Immersion,
- Fig.6: einen meridionalen Linsenschnitt einer aus zwei Linsen bestehenden Kardioidoptik mit Aufstecklinse,
- Fig.7: eine Darstellung der Abbildungsfehler des Linsenschnittes nach Fig.4,
- Fig.8: eine Darstellung der Abbildungsfehler des Linsenschnittes nach Fig.6,
- Fig.9: einen meridionalen Linsenschnitt einer aus drei Linsen bestehenden Kardioidoptik ohne Immersion,
- Fig.10: einen meridionalen Linsenschnitt der aus drei Linsen bestehenden Kardioidoptik mit Immersion,
- Fig.11: einen meridionalen Linsenschnitt einer weiteren, aus drei Linsen bestehenden Kardioidoptik ohne Immersion.

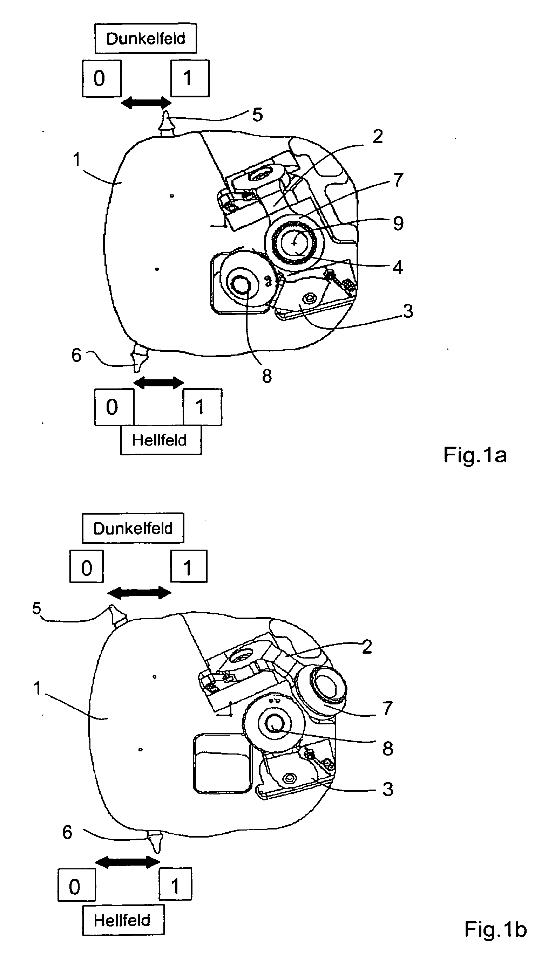

In Fig.1a ist eine Kondensoranordnung für Hell- und/oder Dunkelfeldbeleuchtung für Mikroskope mit einem Kondensorgehäuse 1 in einer Ansicht von oben dargestellt, an welchem außen mehrere schwenkbare Schwenkarme 2 und 3 angeordnet sind, welche zur Aufnahme von Optikbaugruppen, wie hochaperturige Frontoptik für die Hellfeldbeleuchtung oder Kardioidoptik für die Dunkelfeldbeleuchtung, vorgesehen sind. Diese genannten Optikbaugruppen werden bei Bedarf in den Beleuchtungsstrahlengang, für den im Gehäuse 1 eine Öffnung 4 vorgesehen ist, eingeschwenkt, derart, daß sie in einem genau definierten Abstand zu einer gemeinsamen, im Kondensorgehäuse angeordneten Grundoptik (nicht dargestellt) in dem Beleuchtungsstrahlengang positioniert werden. Mit den Schwenkarmen 2, 3 sind die Bedienelemente 5 und 6 über einen Hebelmechanismus (in Fig.1a nicht dargestellt) verbunden, mit welchem die an den Schwenkarmen 2 und 3 angeordneten Optikbaugruppen in den jeweiligen Beleuchtungsstrahlengang eingebracht werden können.

Die Kondensoranordnung nach Fig.1a ist für Dunkelfeldbeleuchtung vorgesehen, wobei die entsprechende Frontoptik 7 für Dunkelfeldbeleuchtung, welche am schwenkbaren Schwenkarm 2 angeordnet ist, in den Beleuchtungsstrahlengang vor die Grundoptik eingeschwenkt ist. In der Fig.1a ist dieser Zustand durch die Stellung "1" eines Bedienelementes 5 gekennzeichnet. Eine am Schwenkarm 3 angeordnete Frontoptik 8, welche für die Hellfeldbeleuchtung vorgesehen ist, befindet sich außerhalb des Beleuchtungsstrahlenganges. Hierbei steht ein Bedienelement 6 in der Stellung "0" für Hellfeldbeleuchtung.

In Fig.1b ist die erfindungsgemäße Kondensoranordnung in einer Ansicht von oben dargestellt, wie sie bei Hellfeldbeleuchtung verwendet wird. Zu diesem Zweck ist die entsprechende Frontoptik 8, welche am Schwenkarm 3 angeordnet ist, in den Beleuchtungsstrahlengang vor der Grundoptik (nicht dargestellt) angeordnet. Die am Schwenkarm 2 befindliche Frontoptik 7 für die Dunkelfeldbeleuchtung befindet sich außerhalb des Beleuchtungsstrahlenganges. Das Bedienelement 5 befindet sich in der Stellung "0" für die Dunkelfeldbeleuchtung und das Bedienelement 6 in der Stellung "1" für Hellfeldbeleuchtung.

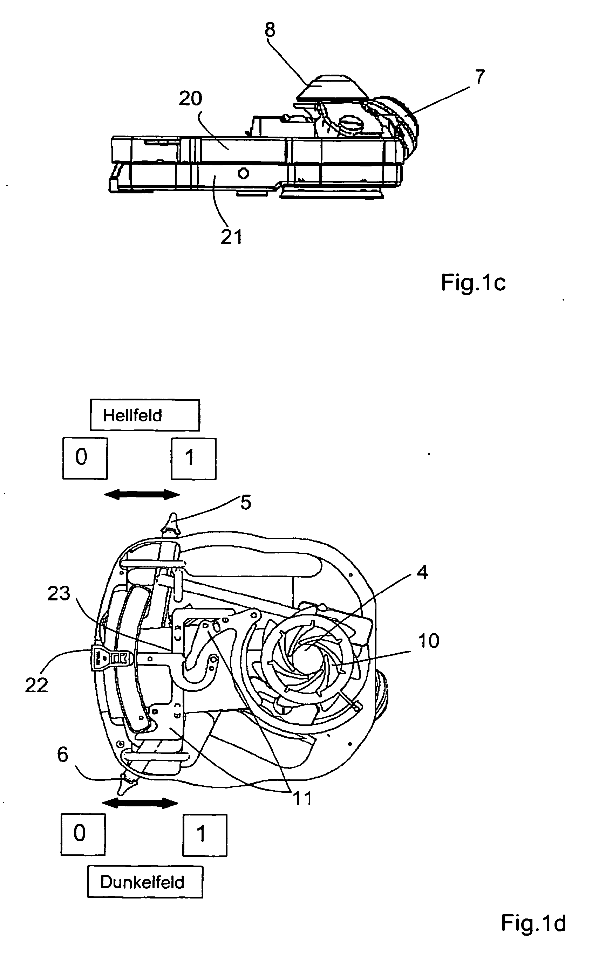

Fig.1c zeigt eine Seitenansicht der Kondensoranordnung nach Fig.1b. Sie umfaßt eine Oberschale 20 mit den daran schwenkbar gelagerten Schwenkarmen 5 und 6, an denen die Frontoptiken 7 und 8 angeordnet sind, und eine Unterschale 21, in welcher Übertragungs- und Hebelmechanismen und Getriebeglieder und die Aperturirisblende 10 (nicht dargestellt in Fig.1c) angeordnet sind.

Fig.1d zeigt die Kondensoranordnung nach Fig.1c in einer Ansicht von unten, wobei die Unterschale 21 entfernt ist und die Frontoptik 8 für Hellfeldbeleuchtung in den Strahlengang eingeschwenkt ist. Das Bedienelement 5 befindet sich in der Stellung "1" für Hellfeld und das Bedienelement 6 für Dunkelfeld in der Stellung "0". Bei dieser Hellfeldbeleuchtungseinstellung kann die Aperturirisblende 10 von außen mit einem Griffstück 22 über einem Hebelmechanismus 23, welcher in der Unterschale 21 angeordnet ist, auf jeden beliebigen Durchmesser innerhalb eines Verstellbereiches eingestellt werden.

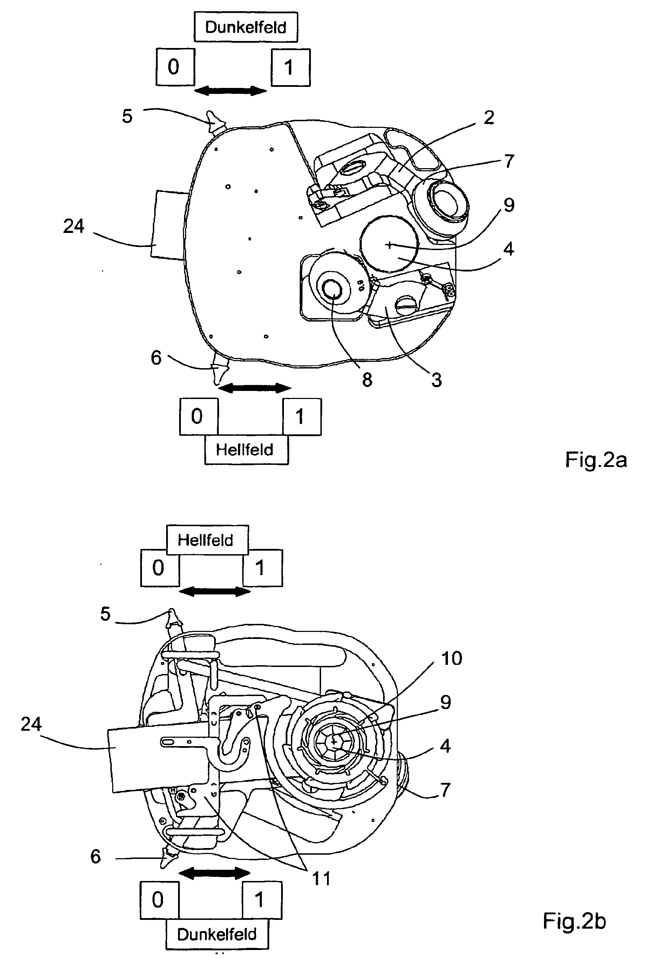

In Fig.2a ist eine Ansicht von oben auf die Kondensoranordnung in einer Einstellung dargestellt, bei der sowohl die Frontoptik 7 für Dunkelfeldbeleuchtung als auch die Frontoptik 8 für Hellfeldbeleuchtung aus der optischen Achse 9 des Beleuchtungsstrahlenganges des Mikroskopes mit den dazu gehörigen Schwenkarmen 2, 3 ausgeschwenkt sind. Beide Bedienelemente 5 und 6 befinden dabei sich in der Stellung "0".

Fig.2b zeigt die Kondensoranordnung in einer Ansicht von unten, wobei die Unterschale 21 entfernt wurde und die beiden Frontoptiken 7 und 8 aus dem Strahlengang entfernt sind. Wie in dieser Fig.2b dargestellt, ist ein Dunkelfeldschieber 24, welcher in die Anordnung eingeschoben werden kann, vorgesehen, mit welchem ein Ringspiegelelement zur Realisierung einer rotationssymmetrischen Dunkelfeldbeleuchtung in großen Objektfeldern mit Objektiven mit 2,5- bis 5-facher Vergrößerung in den Strahlengang eingebracht werden kann. Dieser Dunkelfeldschieber 24 wird oberhalb der Grundoptik bei ausgeschalteten Frontoptiken 7 und 8 in den Strahlengang eingebracht und ist über einen Übertragungsmechanismus 11 mit der Aperturirisblende 10 verbunden. Des Weiteren wird dabei die Aperturirisblende 10, wenn der Dunkelfeldschieber 24 eingeschoben ist, auf ihren maximalen Durchmesser geöffnet. Beim Herausnehmen des Schiebers 24 springt die Aperturirisblende 10 auf den vorher eingestellten Durchmesser zurück, wobei die Schwenkarme 2 und 3 mit den Frontoptiken 7 und 8 aus dem Strahlengang ausgeschwenkt bleiben.

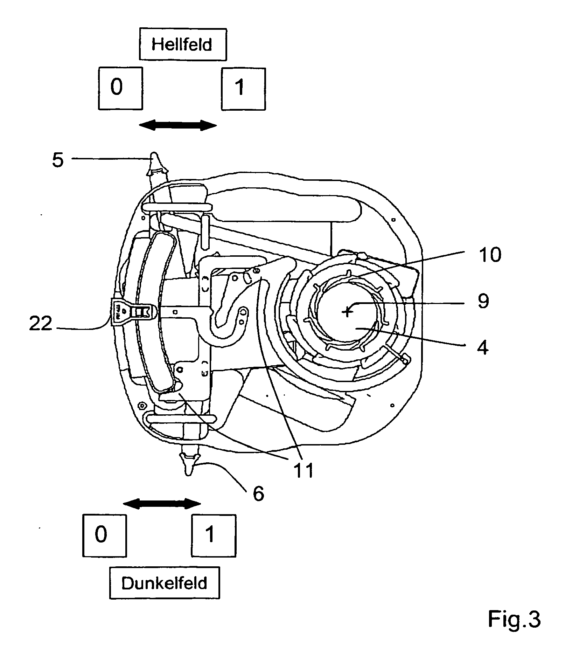

In Fig.3 ist die Kondensoranordnung gemäß Fig.1a in der Ansicht von unten bei entfernter Unterschale 21 und Einstellung auf Dunkelfeldbeleuchtung dargestellt. Die Frontoptik 7 am Schwenkarm 2 (in Fig.3 nicht sichtbar) befindet sich im Beleuchtungsstrahlengang. Die am Schwenkarm 3 angeordnete Frontoptik 8 (in Fig.3 ebenfalls nicht sichtbar) für Hellfeldbeleuchtung ist aus dem Beleuchtungsstrahlengang heraus genommen. Wenn die Frontoptik 7 für Dunkelfeldbeleuchtung sich im Strahlengang befindet, wird die Aperturirisblende 10 über den Übertragungsmechanismus 11 auf ihren maximalen Durchmesser (Öffnung) eingestellt. Das Griffstück 22 verbleibt auf der Stelle, auf der es bei Hellfeldbeleuchtung eingestellt wurde. Beim Umschalten auf Hellfeldbeleuchtung springt dann die Aperturirisblende 10 wieder auf ihren vorher eingestellten Durchmesser zurück.

Die Regulierung der Aperturirisblende 10 wird immer über eines der beiden Bedienelemente 5, 6 ausgelöst. Diese bewegen sich gegensinnig bei alternativem Einschwenken und gleichsinnig bei Ausschwenkung der Schwenkarme 2, 3 mit den daran angeordneten Optiken.

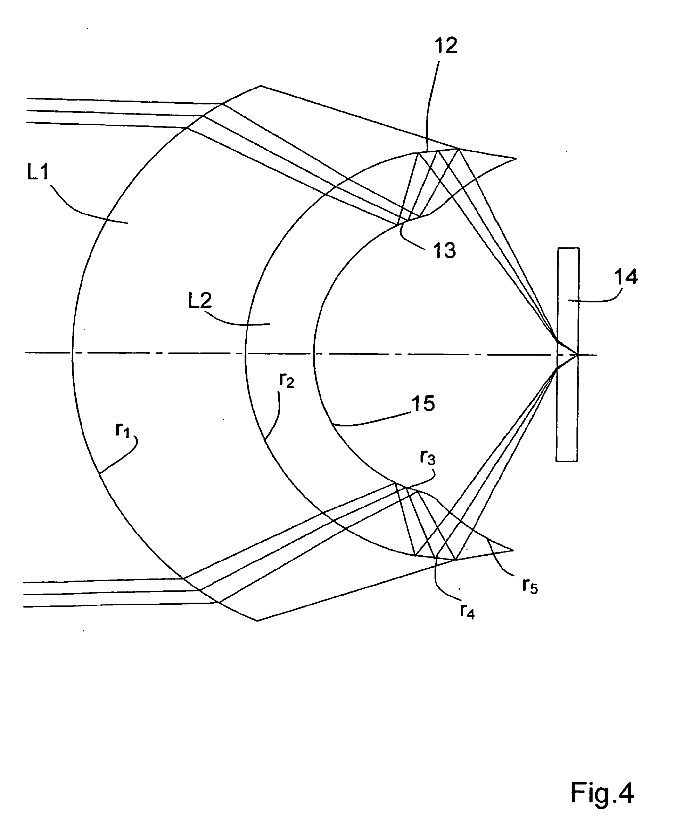

In Fig.4 ist ein meridionaler Linsenschnitt einer Kardioidoptik ohne Immersion zur Realisierung einer Dunkelfeldbeleuchtung dargestellt, welche einer Grundoptik (nicht dargestellt in den Figuren) objektsseitig vorgeschaltet ist und welche den Eigenschaften der zugeordneten Grundoptik angepaßt ist. Diese Kardioidoptik umfaßt ein aus Linsen L₁ und L₂ bestehendes Linsensystem, wovon die Linse L₂ auf einem Teil ihrer beiden Oberflächen mindestens je eine konkave reflektierende Fläche 12 und mindestens eine konvexe reflektierende Fläche 13 besitzt. Die reflektierende Fläche 13 ist auf der dem Objektträger 14 zugewandten Oberfläche der Linse L₂ angeordnet. Diese Kardioidoptik besitzt die folgenden Konstruktionsdaten:

| Linse | Radius | Dicke | n_{d} | ν_{d} | FRD |
|---|---|---|---|---|---|
| L₁ | r₁ = 16.1960 | 9.380 | 1.784 | 26.10 | 30.000 |
| | r₂ = 11.5461 | 3.680 | 1.607 | 56.65 | 23.092 |
| L₂ | r₃ = 8.0590 S | 3.680 | 1.607 | 56.65 | 15.720 |
| | r₄ = -11.5461 S | 7.200 | 1.607 | 56.65 | |
| IM | r₅ = 11.8839 | 9.620 | 1.000/1.515 | --/47.75 | 22.000 |
| T | | 1.100 | 1.522 | 59.48 | 12.000 |

Die überhalbkugelige, verspiegelte Kugelsegmentfläche auf der Linse L₂ ist durch Radien -13.400 mm und -6.800 mm vor dem objektseitigen Linsenscheitel begrenzt. Es bezeichnen n_{d} den Brechungsindex des Glases, ν_{d} die Abbe'sche Zahl, FRD den freien Durchmesser, T den Objektträger 14, S die verspiegelte Fläche, L₁ und L₂ Linsen und IM das Immersionsmedium.

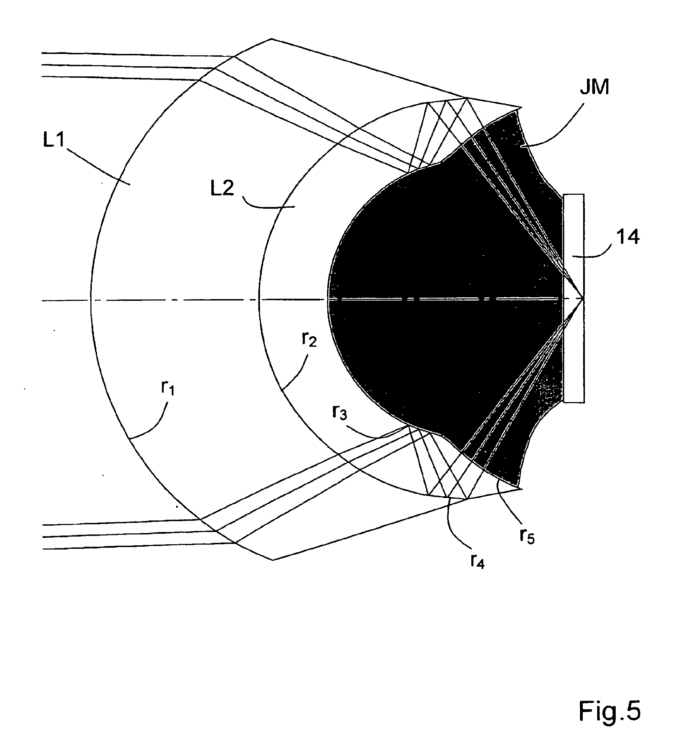

In Fig.5 ist die gleiche Kardioidoptik wie in Fig.4 dargestellt. Im Raum zwischen der dem Objektträger 14 zugewandten Fläche des Linse L₂ und dem Objektträger 14 ist ein an sich bekanntes Immersionsmedium IM eingebracht. Die entsprechenden Konstruktionsdaten dieses Systems sind in oben stehender Tabelle enthalten.

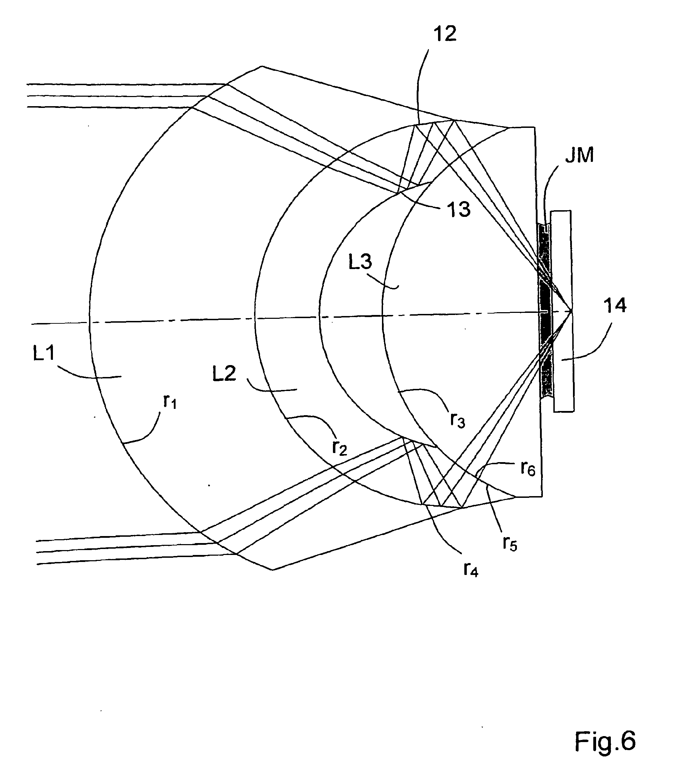

Fig.6 zeigt einen meridionalen Linsenschnitt der aus den Linsen L₁ und L₂ bestehenden Kardioidoptik, wobei der dem Objektträger benachbarten Linse L₂ eine Vorsatz- oder Aufstecklinse L₃ vorgelagert ist. Im Raum zwischen der Aufstecklinse L₃ und dem Objektträger 14 ist ein dünner Luftspalt mit Randauflage der Linsen vorgesehen.

Die entsprechenden Konstruktionsdaten sind in unten stehender Tabelle angegeben.

| Linse | Radius | Dicke | n_{d} | ν_{d} | FRD |
|---|---|---|---|---|---|
| L₁ | r₁ = 16.1960 | 9.380 | 1.784 | 26.10 | 30.000 |
| | r₂ = 11.5461 | 3.680 | 1.607 | 56.65 | 23.092 |
| L₂ | r₃ = 8.0590 S | 3.680 | 1.607 | 56.65 | 15.720 |
| | r₄ = -11.5461 S | 7.200 | 1.607 | 56.65 | 22.000 |
| Luft | r₅ = 11.8839 | 0.00145 | 1.000 | -- | 22.000 |
| L₃ | r₆ = 11.884784 | 8.850 | 1.522 | 59.48 | 22.000 |
| IM | | 0.465 | 1.515 | 47.75 | 22.000 |
| T | | 1.100 | 1.522 | 59.48 | 12.000 |

Die überhalbkugelige, verspiegelte Kugelsegmentfläche auf der Linse L₂ ist durch Radien -13.400 mm und -6.800 mm vor dem objektseitigen Linsenscheitel begrenzt. Es bezeichnen ferner n_{d} den Brechungsindex des Glases, ν_{d} die Abbe'sche Zahl, FRD den freien Durchmesser, T den Objektträger 14, S die verspiegelte Fläche, L₁ bis L₃ Linsen und IM das Immersionsmedium.

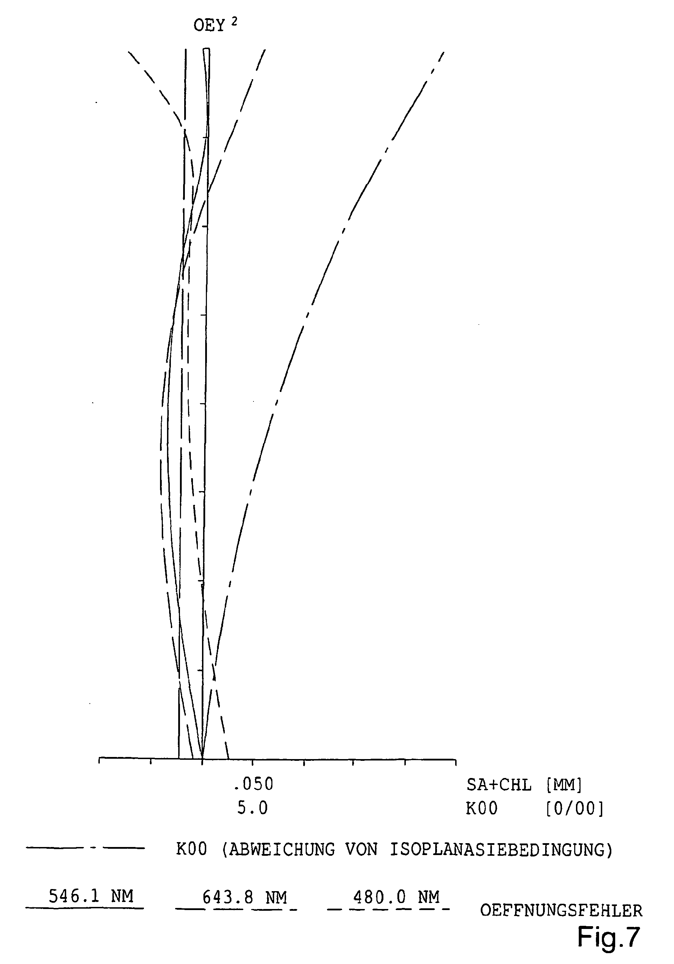

Fig.7 zeigt eine Darstellung von Abbildungsfehlern (sphärische Aberration) der Kardioidoptik nach Fig.4. Es sind in üblicher Darstellung die Abweichung von der Isoplanasiebedingung und die Öffnungsfehler bei den Wellenlängen 546,1 nm, 643,8 nm und 480,0 nm dargestellt.

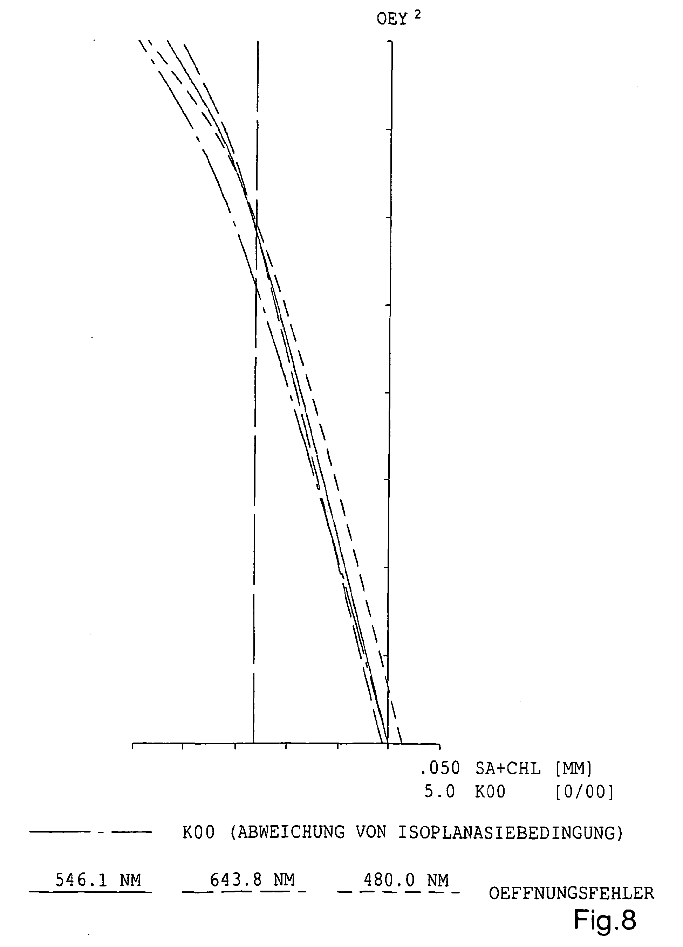

In Fig.8 ist die sphärische Aberration in Abhängigkeit von der Apertur von der in Fig.6 dargestellten Kardioidoptik mit Aufstecklinse L₃ und Immersionsmedium IM in einem Diagramm aufgezeigt. Auch hier sind in üblicher Darstellung die Abweichung von der Isoplanasiebedingung und die Öffnungsfehler bei den Wellenlängen 546,1 nm, 643,8 nm und 480,0 nm dargestellt.

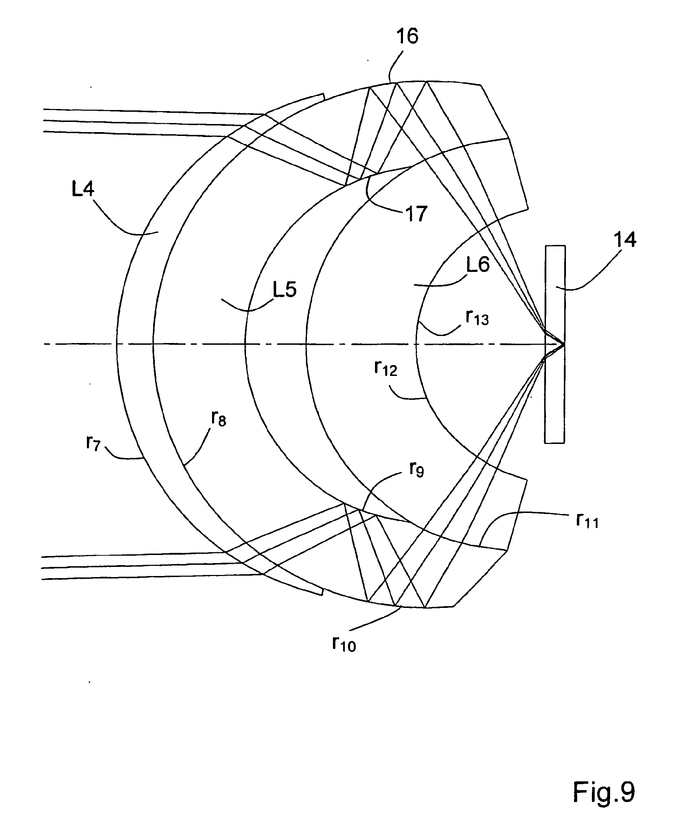

Einen meridionalen Linsenschnitt einer aus drei Linsen L₄, L₅ und L₆ bestehenden Kardioidoptik ohne Verwendung einer Immersion ist in Fig.9 dargestellt. Bei dieser Anordnung besitzt die Linse L₅ auf einer ihrer Oberflächen eine reflektierende, konkav gekrümmte Fläche 16 und auf der anderen Oberfläche, welche dem Objektträger benachbart ist, eine reflektierende, konvex gekrümmte Fläche 17. In der folgenden Tabelle sind die Konstruktionsdaten dieser Kardioidoptik aufgeführt.

| Linse | Radius | Dicke | n_{d} | ν_{d} | FRD |
|---|---|---|---|---|---|
| L₄ | r₇ = 15.6230 | 2.110 | 1.713 | 53.83 | 30.400 |
| | r₈ = 15.9619 | 5.350 | 1.487 | 70.41 | 29.600 |
| L₅ | r₉ = 10.8200 S | 5.350 | 1.487 | 70.41 | 21.500 |
| | r₁₀ = -15.9619 S | 8.920 | 1.487 | 70.41 | |
| L₆ | r₁₁ = 12.4960 | 6.460 | 2.022 | 29.06 | 25.600 |
| | r₁₂ = 8.4140 | 7.510 | | | |
| IM | r₁₃ = 8.4140 | 7.000 | 1.515 | 47.75 | 16.400 |
| T | | 1.100 | 1.515 | 59.48 | 12.000 |

Die überhalbkugelige verspiegelte Kugelsegmentfläche mit Radius r₁₀ auf der Linse L₅ ist durch Radien -19.000 mm und -10.000 mm begrenzt. Weiterhin bedeuten n_{d} der Brechungsindex des Glases, ν_{d} die Abbe'sche Zahl, FRD der freie Durchmesser, T der Objektträger, S die verspiegelte Fläche, L₄ bis L₆ Linsen und IM das Immersionsmedium.

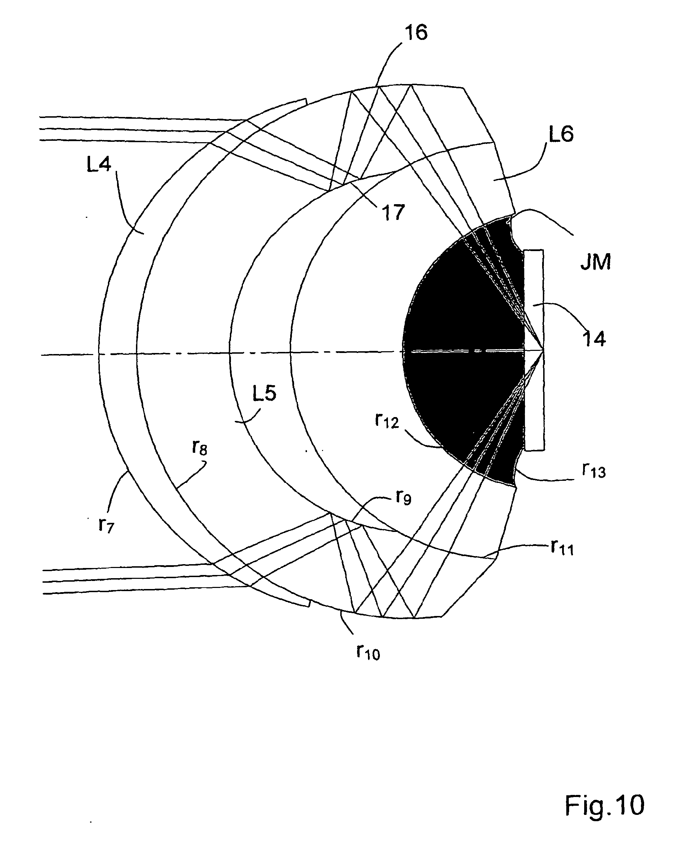

Fig.10 zeigt die Kardioidoptik nach Fig.9, wobei zwischen der Linse L₆ und dem Objektträger 14 ein Immersionsmedium IM vorgesehen ist.

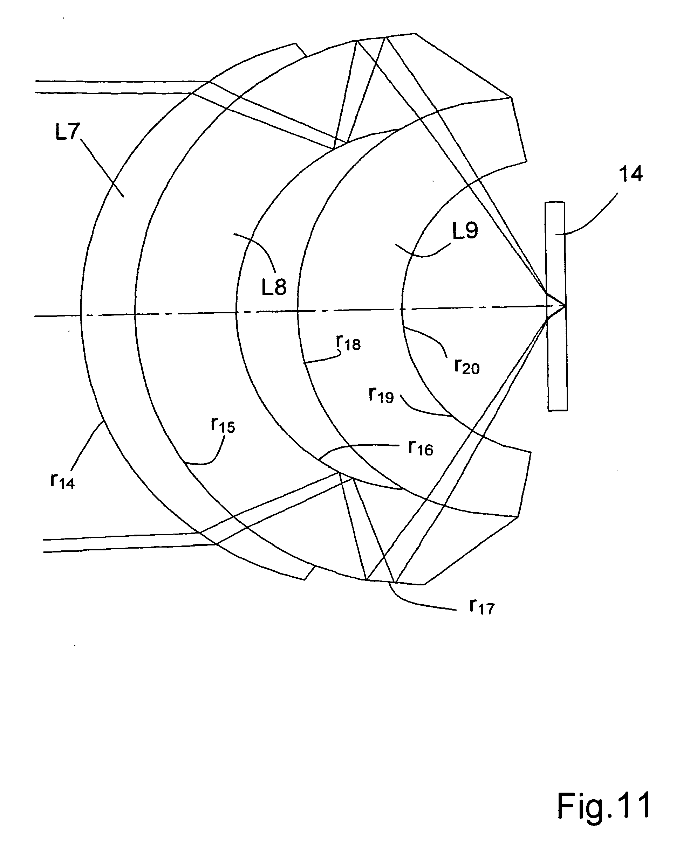

Ein meridionaler Linsenschnitt einer aus drei Linsen L₇, L₈ und L₉ bestehenden Kardioidoptik ist in Fig.11 dargestellt, wobei kein Immersionsmedium vorgesehen ist. Bei dieser Ausführung besitzt die Linse L₈ auf ihrer einen Oberfläche eine konkave reflektierende Fläche 18 und auf ihrer gegenüberliegenden Oberfläche eine konvexe reflektierende Oberfläche 19. Die entsprechenden Konstruktionsdaten dieser Anordnung sind in der unten stehenden Tabelle eingetragen.

| Linse | Radius | Dicke | n_{d} | ν_{d} | FRD |
|---|---|---|---|---|---|
| L₇ | r₁₄ = 15.8495 | 3.0110 | 1.713 | 53.83 | 30.800 |
| | r₁₅ = 15.8495 | 5.5280 | 1.487 | 70.41 | 29.200 |
| L₈ | r₁₆ = 10.4410 S | 5.5280 | 1.487 | 70.41 | 20.700 |
| | r₁₇.= -15.8495 S | 8.9400 | 1.487 | 70.41 | |
| L₉ | r₁₈ = 12.0575 | 5.8360 | 2.022 | 29.06 | 24.114 |
| | r₁₉ = 8.5340 | 7.8500 | | | 16.736 |
| IM | r₂₀ = 8.5340 | 7.3000 | 1.515 | 47.75 | 16.736 |
| T | | 1.1000 | 1.522 | 59.48 | 12.000 |

wobei die überhalbkugelige, verspiegelte Kugelsegmentfläche mit dem Radius r₁₇ auf der Linse L₈ durch Radien -19.000 mm und -10.000 mm vor dem objektseitigen Linsenscheitel begrenzt ist und n_{d} der Brechungsindex des Glases, ν_{d} die Abbe'sche Zahl, FRD der freie Durchmesser, T der Objektträger, S die verspiegelte Fläche, L₇ bis L₉ Linsen und IM das Immersionsmedium sind.

### Bezugszeichen

- 1: Gehäuse
- 2, 3: Schwenkarm
- 4: Öffnung
- 5, 6: Bedienungselement
- 7: Frontoptik (Dunkelfeld)
- 8: Frontoptik (Hellfeld)
- 9: optische Achse
- 10: Aperturirisblende
- 11: Übertragungsmechanismus
- 12, 13: reflektierende Fläche
- 14: Objektträger
- 16, 17: Fläche
- 18, 19: reflektierende Fläche
- 20: Oberschale
- 21: Unterschale
- 22: Griffstück
- 23: Hebelmechanismus
- 24: Dunkelfeldschieber

## Patentansprüche

1. Kondensoranordnung zur Hell- und/oder Dunkelfeldbeleuchtung für Lichtmikroskope, umfassend
- ein Kondensorgehäuse (1),
- eine aus mindestens einer Linse bestehende, feststehende Grundoptik,
- mindestens eine vor die Grundoptik in den Beleuchtungsstrahlengang einbringbare Frontoptik (7) mit einer hohen Apertur für Hellfeldbeleuchtung,
- mindestens eine vor die Grundoptik in den Beleuchtungsstrahlengang einbringbare Kardioidoptik (8) für Dunkelfeldbeleuchtung
- und mit am Kondensorgehäuse (1) angeordneten Mitteln (2,3) zum alternativen Einbringen der Frontoptik (7) oder der Kardioidoptik (8) in den Beleuchtungsstrahlengang des Mikroskops,
**dadurch gekennzeichnet,**
**dass** die am Kondensorgehäuse (1) angeordneten Mittel (2,3) zum Einbringen der Frontoptik (7) und der Kardioidoptik (8) in den Beleuchtungsstrahlengang des Mikroskops als Schwenkarme (2,3) ausgebildet sind.

2. Kondensoranordnung nach Anspruch 1, **dadurch gekennzeichnet, dass** eine Aperturirisblende (10) objektseitig vor der Grundoptik vorhanden ist, welche bei eingeschalteter Kardioidoptik (8) geöffnet ist.

3. Kondensoranordnung nach einem der Ansprüche 1 bis 2, **dadurch gekennzeichnet, dass** objektseitig am Kondensorgehäuse (1) ein Dunkelfeldschieber (24) mit einem Ringspiegelelement vorhanden ist, welcher in das Kondensorgehäuse (1) eingeschoben werden kann.

4. Kondensoranordnung nach einem der Ansprüche 1 bis 3, **dadurch gekennzeichnet, dass** Bedienelemente (5, 6) zur Schwenkung der beiden Schwenkarme (2, 3), zur Bewegung des Dunkelfeldschiebers (24) und zur Einstellung der Aperturirisblende (10) vorhanden sind.

5. Kondensoranordnung nach Anspruch 3, **dadurch gekennzeichnet, dass** auf dem Dunkelfeldschieber (24) weitere optische Elemente, wie DIC-Prismen, Ringblenden zur Realisierung von Phasenkontrast oder Zentraldunkelfeldbeleuchtung vorhanden sind, welche bei eingeschalteter Hellfeldoptik in den Strahlengang einbringbar sind.

6. Kondensoranordnung nach einem der vorgenannten Ansprüche, **dadurch gekennzeichnet, dass** zur Realisierung einer rotationssymmetrischen Dunkelfeldbeleuchtung und bei großen Objektfeldern das Ringspiegelelement bei ausgeschalteter Frontoptik (7) und Kardioidoptik (8) bei geöffneter Aperturirisblende (10) in den Beleuchtungsstrahlengang eingeschaltet ist.

7. Kondensoranordnung nach einem der vorgenannten Ansprüche, **dadurch gekennzeichnet, dass** der erste Schwenkarm (2) über einen ersten Hebelmechanismus mit der Bedienhandhabe für die Aperturirisblende (10) derart verbunden ist, dass beim Einschwenken der ersten Frontoptik (8) in den Beleuchtungsstrahlengang die Aperturirisblende (10) auf den zuvor eingestellten Durchmesser eingestellt ist.

8. Kondensoranordnung nach einem der vorgenannten Ansprüche, **dadurch gekennzeichnet, dass** der zweite Schwenkarm (3) über einen zweiten Hebelmechanismus mit der Bedienhandhabe für die Aperturirisblende (10) derart verbunden ist, dass beim Einschwenken der zweiten Frontoptik (7) in den Beleuchtungsstrahlengang die Aperturirisblende (10) geöffnet ist.

## Claims

1. Condenser arrangement for bright-field and/or dark-field illumination for light microscopes, comprising
- a condenser housing (1),
- a fixed basic optics consisting of at least one lens,
- at least one front optics (7) which can be introduced into the illumination beam path upstream of the basic optics and has a high aperture for bright-field illumination,
- at least one cardioid optics (8), which can be introduced into the illumination beam path upstream of the basic optics, for dark-field illumination,
- and having means (2, 3), arranged on the condenser housing (1) for alternatively introducing the front optics (7) or the cardioid optics (8) into the illumination beam path of the microscope,
**characterized**
**in that** the means (2, 3), arranged on the condenser housing (1), for introducing the front optics (7) and the cardioid optics (8) into the illumination beam path of the microscope are designed as pivot arms (2, 3).

2. Condenser arrangement according to Claim 1, **characterized in that** there is present on the object side upstream of the basic optics an aperture iris diaphragm (10) which is open when the cardioid optics (8) is inserted.

3. Condenser arrangement according to one of Claims 1 to 2, **characterized in that** present on the object side on the condenser housing (1) is a dark-field slide (24) having an annular mirror element, which dark-field slide can be inserted into the condenser housing (1).

4. Condenser arrangement according to one of Claims 1 to 3, **characterized in that** operating elements (5, 6) are present for pivoting the two pivot arms (2, 3), for moving the dark-field slide (24) and for setting the aperture iris diaphragm (10).

5. Condenser arrangement according to Claim 3, **characterized in that** present on the dark-field slide (24) are further optical elements, such as DIC prisms and annular diaphragms for implementing phase contrast or central dark-field illumination, which can be introduced into the beam path with bright-field optics inserted.

6. Condenser arrangement according to one of the above claims, **characterized in that**, given large object fields, in order to implement a rotationally symmetrical dark-field illumination the annular mirror element is inserted into the illumination beam path with the front optics (7) and cardioid optics (8) withdrawn, and is inserted into the illumination beam path with the aperture iris diaphragm (10) open.

7. Condenser arrangement according to one of the preceding claims, **characterized in that** via a first lever mechanism the first pivot arm (2) is connected to the operating handle for the aperture iris diaphragm (10) in such a way that when the first front optics (8) is pivoted into the illumination beam path the aperture iris diaphragm (10) is set to the previously set diameter.

8. Condenser arrangement according to one of the preceding claims, **characterized in that** via a second lever mechanism the second pivot arm (3) is connected to the operating handle for the aperture iris diaphragm (10) in such a way that when the second front optics (7) is pivoted into the illumination beam path the aperture iris diaphragm (10) is open.

## Revendications

1. Dispositif condenseur d'un microscope pour éclairage à fond clair ou fond noir, comprenant
- un boîtier de condenseur (1),
- une optique de base fixe constituée d'au moins une lentille,
- au moins une optique frontale (7) ayant une grande ouverture pour l'éclairage à fond clair pouvant être introduite dans le chemin optique d'éclairage devant l'optique de base,
- au moins une optique cardioïde (8) pour l'éclairage à fond noir pouvant être introduite dans le chemin optique d'éclairage devant l'optique de base,
- et avec des moyens (2, 3) disposés sur le boîtier de condenseur (1) pour l'introduction alternative de l'optique frontale (7) ou de l'optique cardioïde (8) dans le chemin optique d'éclairage du microscope,
**caractérisé en ce que** les moyens (2, 3) disposés sur le boîtier de condenseur (1) pour l'introduction de l'optique frontale (7) et de l'optique cardioïde (8) dans le chemin optique d'éclairage du microscope sont réalisés sous la forme de bras pivotants (2, 3).

2. Dispositif condenseur selon la revendication 1, **caractérisé en ce qu'**il existe un iris obturateur d'ouverture (10) du côté objet devant l'optique de base, celui-ci étant ouvert lorsque l'optique cardioïde (8) est enclenchée.

3. Dispositif condenseur selon une des revendications 1 à 2, **caractérisé en ce qu'**il existe un coulisseau de fond noir (24) du côté objet sur le boîtier de condenseur (1) avec un élément miroir annulaire, celui-ci pouvant être coulissé dans le boîtier de condenseur (1).

4. Dispositif condenseur selon une des revendications 1 à 3, **caractérisé en ce qu'**il existe des éléments de commande (5, 6) pour le pivotement des deux bras pivotants (2, 3), pour actionner le coulisseau de fond noir (24) et pour le réglage de l'iris obturateur d'ouverture (10).

5. Dispositif condenseur selon la revendication 3, **caractérisé en ce que** sur le coulisseau de fond noir (24), il existe d'autres éléments optiques, comme des prismes DIC, des obturateurs annulaires pour la réalisation de contraste de phase ou d'éclairage central à fond noir, qui peuvent être introduits dans le chemin optique lorsque l'optique à fond clair est enclenchée.

6. Dispositif condenseur selon une des revendications précédentes, **caractérisé en ce que** pour la réalisation d'un éclairage à fond noir symétrique en rotation et avec des champs objets étendus, on enclenche l'élément miroir annulaire dans le chemin optique d'éclairage lorsque l'optique frontale (7) et l'optique cardioïde (8) sont déclenchées et l'iris obturateur d'ouverture (10) enclenché.

7. Dispositif condenseur selon une des revendications précédentes, **caractérisé en ce que** le premier bras pivotant (2) est relié par l'intermédiaire d'un premier mécanisme à levier à la manette de commande de l'iris obturateur d'ouverture (10) de telle sorte que lors de l'introduction par pivotement de la première optique frontale (8) dans le chemin optique d'éclairage, l'iris obturateur d'ouverture (10) est réglé sur le diamètre réglé précédemment.

8. Dispositif condenseur selon une des revendications précédentes, **caractérisé en ce que** le deuxième bras pivotant (3) est relié par l'intermédiaire d'un deuxième mécanisme à levier à la manette de commande de l'iris obturateur d'ouverture (10) de telle sorte que lors de l'introduction par pivotement de la deuxième optique frontale (7) dans le chemin optique d'éclairage, l'iris obturateur d'ouverture (10) est ouvert.
